# DEMANDE DE BREVET EUROPEEN

(11) **EP 4 596 919 A1**
(43) Date de publication de la demande: **06.08.2025**
(21) Numéro de dépôt: 25152720.6
(22) Date de dépôt: 20.01.2025
(51) Int. Cl.: F16H 3/10, F16D 41/14, F16H 3/14

(54) **DISPOSITIF DE TRANSMISSION DÉBRAYABLE ET MACHINE AGRICOLE COMPRENANT UN TEL DISPOSITIF**

(30) Priorité: 30.01.2024 FR 2400892
(71) Demandeur: Kuhn SAS, 67700 Saverne (FR)
(72) Inventeur: WILHELM, Joël, 57820 SAINT-LOUIS (FR); BRUYEN, Thomas, 57370 HANGWILLER (FR)

(57) **Abrégé**

Dispositif de transmission de mouvement de rotation avec des arbres primaire et secondaire, un premier élément de transmission monté sur le premier arbre, un deuxième élément de transmission monté sur le deuxième arbre et lié cinématiquement avec le premier élément de transmission, et une pièce d'accouplement qui permet de lier cinématiquement le premier élément de transmission avec le premier arbre, ainsi qu'un baladeur monté axialement mobile sur le premier arbre de sorte à pouvoir occuper deux positions dans lesquelles le premier arbre transmet ou non son mouvement de rotation au premier élément de transmission, par le biais de la pièce, dans la première position du baladeur, la ou chaque pièce d'accouplement est soumise à un effort dirigé sensiblement vers l'axe du premier arbre de sorte que la ou chaque pièce d'accouplement ne peut pas transmettre de mouvement de rotation entre le premier arbre et le premier élément de transmission.

## Description

La présente invention concerne le domaine des équipements de transmission de mouvement rotatoire ou de couple entre une entrée et une ou plusieurs sorties, notamment en relation avec des applications dans le machinisme agricole, et a pour objets un dispositif de transmission débrayable, avantageusement à au moins deux vitesses, et une machine agricole comprenant un tel dispositif.

De nombreuses constructions de dispositifs de transmission de mouvement de rotation ou de couple sont déjà connues.

En particulier, on connait un dispositif de transmission de mouvement de rotation, lequel comprend un premier arbre pouvant être entrainé en rotation autour d'un premier axe et un deuxième arbre, une première roue montée sur le premier arbre, une deuxième roue solidaire en rotation du deuxième arbre au moins dans un sens de rotation et liée cinématiquement avec la première roue, et au moins une pièce d'accouplement primaire montée dans un logement primaire du premier arbre de manière à pouvoir transmettre la rotation entre le premier arbre et la première roue autour du premier axe au moins dans un sens de rotation. Ce dispositif comprend également un baladeur monté axialement mobile sur le premier arbre de sorte à pouvoir occuper une première position dans laquelle la pièce d'accouplement primaire ne peut pas transmettre sa rotation à la première roue, et une deuxième position dans laquelle la pièce d'accouplement primaire est engagée dans un site intérieur de la première roue de sorte que la pièce d'accouplement primaire peut transmettre la rotation entre le premier arbre et la première roue au moins dans un sens de rotation.

Toutefois, un premier type de dispositifs connus de ce genre présente l'inconvénient de nécessiter un alignement de la pièce d'accouplement primaire avec le site intérieur de la première roue pour pouvoir changer le baladeur de position. En outre, il est risqué de changer la position du baladeur lorsque le premier arbre est entrainé en rotation.

Dans un second type de dispositifs connus de ce genre, la transmission du mouvement de rotation entre le premier arbre et la première roue est réalisé par l'intermédiaire de disques de friction, dont la réalisation est couteuse et complexe et qui présente le désavantage supplémentaire d'être sujet au glissement ou patinage, ce qui induit une limitation du couple maximal transmissible, un entretien régulier, une usure importante et/ou une durée de vie limitée.

Le document US 20070278061 A1 divulgue également un dispositif de transmission similaire, dans lequel chaque pièce d'accouplement primaire est montée dans un logement primaire réalisé dans une couronne intérieure montée sur le premier arbre, et dans lequel chaque pièce d'accouplement primaire peut être engagée dans un site intérieur réalisé dans une couronne extérieure reliée avec la roue respective. Le dispositif du document US 20070278061 A1 nécessite ainsi un nombre de pièce important et implique un assemblage plus difficile et plus long, le rendant plus cher à la fabrication. De plus, le changement de position du baladeur de ce dispositif induit un effort axial du baladeur sur une plaque d'application, dont le déplacement axial force un anneau de sélection à pivoter autour de l'axe du premier arbre afin que cet anneau exerce un effort sur des pièces d'accouplement dirigé sensiblement vers l'axe du premier arbre. Il ressort de ce qui précède que ce dispositif nécessite un tel nombre de pièces intermédiaires entre le baladeur et les pièces d'accouplement qu'il est nécessairement plus complexe, encombrant et cher à mettre en oeuvre.

La présente invention a pour but principal de pallier les inconvénients des solutions existantes précitées.

A cet effet, l'invention a pour objet un dispositif de transmission de mouvement de rotation du genre mentionné ci-dessus et qui est caractérisé en ce que, dans sa première position, le baladeur induit un effort sur la pièce d'accouplement primaire dirigé sensiblement vers premier axe de sorte que la pièce d'accouplement primaire ne peut pas être engagée dans un site intérieur primaire ni transmettre de rotation entre le premier arbre et la première roue.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] représente schématiquement un dispositif de transmission selon un premier mode de réalisation de l'invention, en coupe suivant un plan passant par les premier et deuxième axes, avec des premier et deuxième arbres parallèles entre eux et une seule voie possible de transmission de mouvement, le dispositif étant illustré dans la deuxième position du baladeur (accouplement du premier arbre avec la première roue) ;
[Fig. 2] représente schématiquement un dispositif de transmission selon un deuxième mode de réalisation préféré de l'invention, en coupe suivant un plan passant par les premier et deuxième axes, avec des premier et deuxième arbres parallèles entre eux et deux voies possibles de transmission de mouvement, illustré dans la première position du baladeur (absence d'accouplement entre premier arbre et première roue et accouplement entre premier arbre et troisième roue) ;
[Fig. 3] représente schématiquement un dispositif de transmission selon un troisième mode de réalisation de l'invention, avec des premier et deuxième arbres perpendiculaires entre eux et deux voies possibles de transmission de mouvement, illustré dans la deuxième position du baladeur (absence d'accouplement entre premier arbre et troisième roue et accouplement entre premier arbre et première roue) ;
[Fig. 4] est une vue en perspective d'une réalisation pratique possible du dispositif de la figure 2 ;
[Fig. 5] est une vue en coupe, selon un plan contenant le premier axe, d'une partie du dispositif de la figure 4 comprenant le premier arbre et les éléments montés sur ce dernier ;
[Fig. 6A] et [Fig. 6B] sont des vues en coupe respectivement selon XX et selon YY de la partie du dispositif illustrée sur la figure 5 ; et,
[Fig. 6C] est une figure similaire à la figure 6A selon la variante de réalisation dans laquelle le premier arbre et la première roue sont solidaires en rotation dans les deux sens.

Les figures annexées illustrent différents modes de réalisation d'un dispositif (1) de transmission de mouvement de rotation. Ce dispositif (1) comprend un premier arbre (2) pouvant être entrainé en rotation autour d'un premier axe (2') et un deuxième arbre (3). Le dispositif (1) comprend également une première roue (4) montée sur le premier arbre (2) et une deuxième roue (5) solidaire en rotation du deuxième arbre (3) au moins dans un sens de rotation et liée cinématiquement avec la première roue (4). La deuxième roue (5) engrène de préférence directement avec la première roue (4). Le dispositif (1) comprend aussi au moins une pièce d'accouplement primaire (6) montée dans un logement primaire (8) du premier arbre (2). De cette manière, la ou chaque pièce d'accouplement primaire (6) peut transmettre la rotation entre le premier arbre (2) et la première roue (4) autour du premier axe (2'), au moins dans un sens de rotation. Le fait que le logement primaire (8) soit directement réalisé dans le premier arbre (2) permet de réduire le nombre de composant du dispositif (1). Ce dispositif (1) comprend en outre un baladeur (7) monté axialement mobile sur le premier arbre (2) de sorte à pouvoir occuper une première position dans laquelle la pièce d'accouplement primaire (6) ne peut pas transmettre sa rotation à la première roue (4). Ledit baladeur (7) peut occuper une deuxième position dans laquelle la pièce d'accouplement primaire (6) est engagée dans un site intérieur primaire (10) de la première roue (4) de sorte que la pièce d'accouplement primaire (6) peut transmettre la rotation entre le premier arbre (2) et la première roue (4) au moins dans un sens de rotation. Le fait que le site intérieur primaire (10) soit directement réalisé dans la première roue (4) permet de réduire le nombre de composant du dispositif (1).

Conformément à l'invention, dans sa première position, le baladeur (7) induit un effort sur la pièce d'accouplement primaire (6) dirigé sensiblement vers le premier axe (2') de sorte que la pièce d'accouplement primaire (6) ne peut pas être engagée dans un site intérieur primaire (10), ni transmettre de rotation entre le premier arbre (2) et la première roue (4). Ainsi, on peut indiquer que le premier arbre (2) et la première roue (4) sont rotationnellement désaccouplés ou libres dans cette première position du baladeur (7).

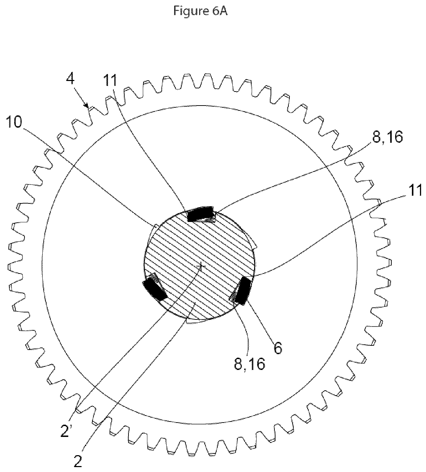

Grâce aux dispositions de l'invention ci-dessus, il est possible de déplacer axialement le baladeur (7) même si la pièce d'accouplement primaire (6) n'est pas alignée avec un site intérieur primaire (10). En effet, après le déplacement du baladeur (7) de sa première position à sa deuxième position, le déplacement (sensiblement radial) de la pièce d'accouplement primaire (6) n'est possible qu'au moment où sa position radiale correspond au placement radial d'un site intérieur primaire (10), c'est-à-dire seulement lorsque ladite pièce et ledit site sont radialement alignés, ainsi qu'illustré par exemple sur la figure 6A. En outre, quel que soit l'emplacement radial ou angulaire de la pièce d'accouplement primaire (6) par rapport à celui du ou de chaque site intérieur primaire (10), le déplacement du baladeur (7) entre sa deuxième position et sa première position est réalisable. Il est ainsi possible de déplacer axialement le baladeur (7) lorsque les arbres primaire (2) et secondaire (3) sont à l'arrêt et ce quel que soit leur positionnement.

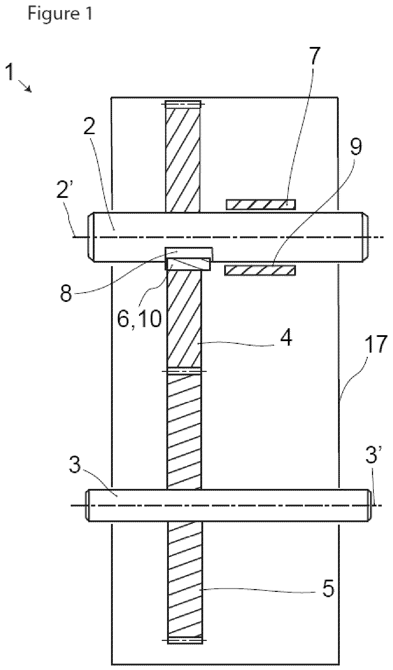

Dans le mode de réalisation de la figure 1, dans la première position du baladeur (7), le mouvement de rotation du premier arbre (2) n'est transmis pas au deuxième arbre (3). Sur la figure 1, dans la deuxième position du baladeur (7), le mouvement de rotation du premier arbre (2) est transmis au deuxième arbre (3). Dans le mode de réalisation de la figure 1, le changement de position du baladeur (7) entre ses première et deuxième positions permet de transmettre, ou non, le mouvement de rotation entre le premier arbre (2) et le deuxième arbre (3).

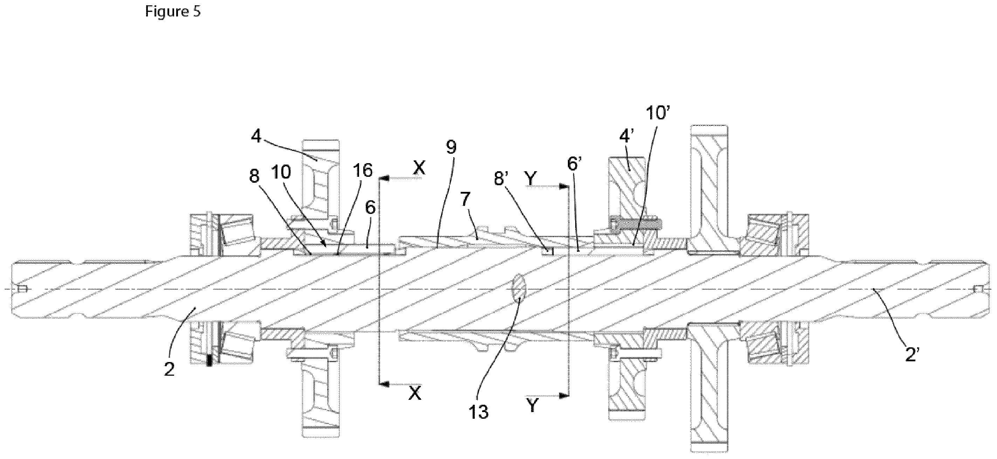

Le premier axe (2') est l'axe de rotation du premier arbre (2). Autrement dit, le premier axe (2') est l'axe autour duquel le premier arbre (2) est guidé en rotation. Tel qu'illustré par exemple sur la figure 5, le premier arbre (2) est guidé en rotation autour du premier axe (2') par des roulements à rouleau. Il pourrait cependant être, en variante, guidé en rotation par des paliers lisses et/ou des roulements à billes. Le deuxième axe (3') est l'axe de rotation du deuxième arbre (3). Le deuxième axe (3') est l'axe autour duquel le deuxième arbre (3) peut être entrainé en rotation.

De manière simple et économique, la deuxième roue (5) est fixe par rapport au deuxième arbre (3). La deuxième roue (5) peut par exemple être fixée au deuxième arbre (3) par une goupille radiale traversante. Alternativement, au moins une pièce d'accouplement supplémentaire permet de lier cinématiquement la deuxième roue (5) avec le deuxième arbre (3) dans un seul sens de rotation.

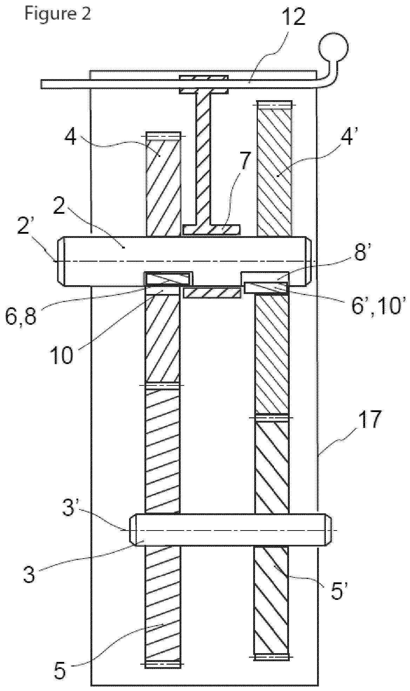

Ainsi qu'il ressort de la figure 2 notamment, dans la première position du baladeur (7), la pièce d'accouplement primaire (6) est située au moins partiellement entre le premier arbre (2) et le baladeur (7), réduisant l'encombrement du dispositif (1). Dans les modes de réalisations des figures, lorsque la pièce d'accouplement primaire (6) est située, même partiellement, entre le premier arbre (2) et le baladeur (7), l'effort appliqué sur la pièce d'accouplement primaire (6) dirigé sensiblement vers le premier axe (2') est directement appliqué par le baladeur (7). L'absence de composant intermédiaire entre baladeur (7) et pièce d'accouplement primaire (6) induit un nombre réduit de composants nécessaires. L'effort appliqué par le baladeur (7) sur la pièce d'accouplement primaire (6) maintient la pièce d'accouplement primaire (6) dans une position rentrée ou escamotée dans le premier arbre (2). Dans cette position rentrée, la pièce d'accouplement primaire (6) est entièrement située dans le logement primaire (8). Dans sa position rentrée, la pièce d'accouplement primaire (6) est comprise dans un cercle de diamètre inférieur au diamètre intérieur de la première roue (4), de sorte que la pièce d'accouplement primaire (6) ne peut pas être engagée dans un site intérieur primaire (10). Le diamètre intérieur de la première roue (4) est son diamètre minimum. Ainsi, dans la première position, le baladeur (7) ceinture chaque pièce d'accouplement primaire (6) afin de la maintenir dans sa position rentrée. Aussi, dans sa première position, le baladeur (7) applique un effort sur la pièce d'accouplement primaire (6) dirigé sensiblement vers le premier axe (2'). Dans la première position du baladeur (7), une partie de la ou chaque pièce d'accouplement primaire (6) est maintenue en contact entre le baladeur (7) et le premier arbre (2), et une autre partie est située entre la première roue (4) et le premier arbre (2), évitant avantageusement que le baladeur (7) ne chevauche axialement la première roue (4), simplifiant leur réalisation et assemblage et réduisant l'encombrement radial du dispositif (1). Dans la première position du baladeur (7), aucune pièce d'accouplement primaire (6) n'est en contact avec la première roue (4).

Ainsi qu'il ressort des figures 1, 3, 5 et 6A, lorsque le baladeur (7) est dans sa deuxième position, la pièce d'accouplement primaire (6) est en position sortie ou saillante par rapport à le premier arbre (2). Dans cette position sortie, la pièce d'accouplement primaire (6) est engagée dans un site intérieur primaire (10) de la première roue (4) et aussi partiellement dans le logement primaire (8) respectif, ainsi que représenté dans les figures précitées. Dans sa position sortie, la pièce d'accouplement primaire (6) prend appui sur une surface de la première roue (4), à savoir une paroi du site (10) la recevant, permettant de transmettre la rotation entre le premier arbre (2) et la première roue (4). Dans sa position sortie, la pièce d'accouplement primaire (6) peut donc transmettre la rotation entre le premier arbre (2) et la première roue (4) dans un unique sens de rotation (figure 6A) ou éventuellement dans les deux (figures 1 à 3 selon le cas). Dans la deuxième position du baladeur (7), le baladeur (7) ne ceinture pas la ou les pièce(s) d'accouplement primaire (6). Dans la deuxième position du baladeur (7), la pièce d'accouplement primaire (6) n'est pas située entre le baladeur (7) et le premier arbre (2). Dans la deuxième position du baladeur (7), le baladeur (7) est décalé axialement par rapport à la pièce d'accouplement primaire (6) de sorte qu'il n'induit aucun effort sur celle-ci.

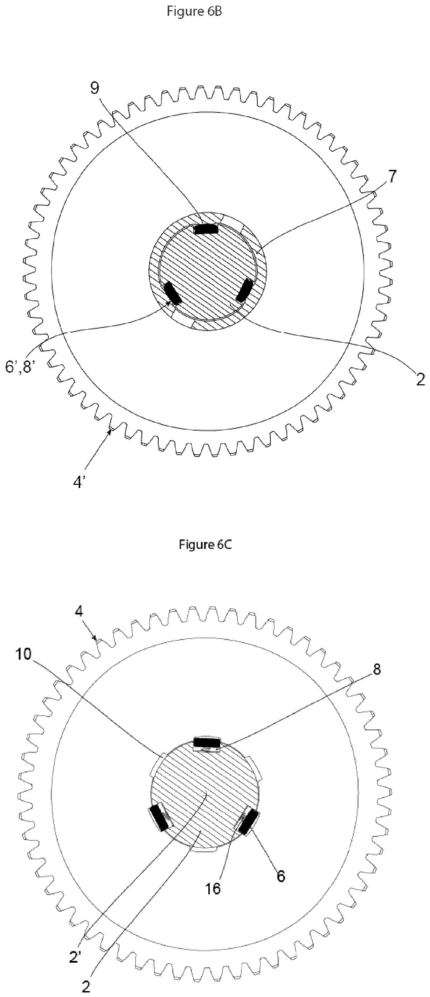

En accord avec un deuxième et un troisième modes de réalisation (illustrés sur les figures 2 à 6), le dispositif (1) comprend également une troisième roue (4') montée sur le premier arbre (2). En accord avec le deuxième mode de réalisation préféré de la figure 2, le dispositif (1) comprend encore une quatrième roue (5') montée sur le deuxième arbre (3). Préférentiellement, la quatrième roue (5') est solidaire en rotation du deuxième arbre (3) au moins dans un sens de rotation. De plus, la quatrième roue (5') est liée cinématiquement à la troisième roue (4'). De préférence, la quatrième roue (5') engrène directement avec la troisième roue (4'). De manière simple et économique, la quatrième roue (5') est fixe par rapport au deuxième arbre (3), par exemple par le biais d'une clé demi-lune. Un entrainement entre le deuxième arbre (3) et au moins une des deuxième roue (5) et quatrième roue (5') dans les deux sens de rotation peut également être réalisé par cannelures. Alternativement, au moins une roue libre, par exemple réalisée via au moins une pièce d'accouplement additionnelle rétractable, tel qu'illustré sur la figure 6B pour la première roue (4), permet de lier cinématiquement la quatrième roue (5') avec le deuxième arbre (3) dans un unique sens de rotation.

Dans les deuxième et troisième modes de réalisation, le dispositif (1) comprend aussi au moins une pièce d'accouplement secondaire (6') montée dans un logement secondaire (8') du premier arbre (2). Tel qu'illustré sur la figure 2, dans la première position du baladeur (7), la pièce ou chaque d'accouplement secondaire (6') est engagée dans un site intérieur secondaire (10') de la troisième roue (4') de sorte que la pièce d'accouplement secondaire (6') peut transmettre la rotation entre le premier arbre (2) et la troisième roue (4') au moins dans un sens de rotation. Dans la deuxième position du baladeur (7), le baladeur (7) induit un effort sur la pièce d'accouplement secondaire (6') de sorte que la ou les pièce(s) d'accouplement secondaire(s) (6') ne peut(peuvent) pas être engagée(s) dans un site intérieur secondaire (10') de la troisième roue (4'), ni transmettre de rotation entre le premier arbre (2) et la troisième roue (4'). Grâce à ces dispositions, il est possible de déplacer axialement le baladeur (7) dans ses première et deuxième positions à tout moment, c'est-à-dire quelle que soit la position de chaque pièce d'accouplement (6, 6') par rapport aux sites intérieurs (10, 10'), et que les arbres (2, 3) soient en rotation ou à l'arrêt.

Ainsi, dans le deuxième mode de réalisation, le dispositif (1) permet de lier cinématiquement entre eux deux arbres (2 et 3) par au moins deux voies de transmission de mouvement. Dans le mode de réalisation préféré, le rapport de transmission entre la première roue (4) et la deuxième roue (5) est différent du rapport de transmission entre la troisième roue (4') et la quatrième roue (5'), le dispositif (1) permettant ainsi d'adapter la transmission en fonction de la situation et/ou du besoin. Dans le mode de réalisation préféré, le dispositif (1) est ainsi une boîte de transmission à deux vitesses. Le changement de vitesse est contrôlé au niveau du premier arbre (2) par simple déplacement axial du baladeur (7). Ainsi, dans le deuxième mode de réalisation, le changement de position du baladeur (7) (entre ses première et deuxième positions) permet de modifier le facteur de réduction entre le premier arbre (2) et le deuxième arbre (3).

De manière simple et économique, en vue de réduire le nombre de composants, le site intérieur primaire (10) fait partie de la première roue (4), dans laquelle il est préférentiellement usiné. Semblablement, le site intérieur secondaire (10') fait partie de la troisième roue (4), dans laquelle il est préférentiellement usiné. Le fait que chaque pièce d'accouplement (6, 6') puisse transmettre la rotation directement (sans composant intermédiaire) entre la roue (4, 4') respective et le premier arbre (2) permet de réduire le nombre de composants du dispositif (1), donc son coût de revient, ainsi que de simplifier l'assemblage du dispositif (1).

Ainsi qu'il ressort de la figure 5 notamment, dans le mode de réalisation préféré et dans la deuxième position du baladeur (7), la pièce d'accouplement secondaire (6') est située au moins partiellement entre le premier arbre (2) et le baladeur (7). Dans ce mode de réalisation, lorsque la pièce d'accouplement secondaire (6') est située, même partiellement, entre le premier arbre (2) et le baladeur (7), l'effort appliqué sur la pièce d'accouplement secondaire (6') dirigé sensiblement vers le premier axe (2') est directement appliqué par le baladeur (7). Cet effort appliqué par le baladeur (7) sur la pièce d'accouplement secondaire (6') maintient la pièce d'accouplement secondaire (6') dans une position rentrée ou escamotée dans le premier arbre (2) (figure 6B). Dans la position rentrée, la pièce d'accouplement secondaire (6') est entièrement dans le logement secondaire (8'). Dans sa position rentrée, la pièce d'accouplement secondaire (6') est comprise dans un cercle de diamètre inférieur au diamètre intérieur de la troisième roue (4'), de sorte que la pièce d'accouplement secondaire (6') ne pas être engagée dans un site intérieur secondaire (10'). Le diamètre intérieur de la troisième roue (4') est son diamètre minimum.

Ainsi qu'il ressort de la figure 2, dans le mode de réalisation préféré, lorsque le baladeur (7) est dans sa première position, la pièce d'accouplement secondaire (6') est en position sortie ou saillante par rapport à le premier arbre (2). Dans cette position sortie, la pièce d'accouplement secondaire (6') est engagée dans un site intérieur secondaire (10') de la troisième roue (4') et partiellement dans le logement secondaire (8') respectif. Dans sa position sortie, la pièce d'accouplement secondaire (6') prend appui sur une surface de la troisième roue (4'), permettant de transmettre la rotation entre le premier arbre (2) et la troisième roue (4'). Dans sa première position, la pièce d'accouplement secondaire (6') n'est pas située entre le baladeur (7) et le premier arbre (2), le baladeur (7) étant décalé axialement par rapport à la pièce d'accouplement secondaire (6') et n'induisant aucun effort sur celle-ci.

Le fait que chaque pièce d'accouplement (6, 6') peut être engagée dans un site intérieur (10, 10') de la roue (4, 4') respective et partiellement dans le logement (8, 8') respectif du premier arbre (2) permet de réduire le nombre de composants du dispositif (1) et donc son coût de revient. Un nombre réduit de composants permet également de simplifier l'assemblage et la réparabilité d'un tel dispositif. Il ressort notamment de la figure 5 que chaque site intérieur (10, 10') et chaque logement (8, 8') sont situés au moins partiellement entre le premier arbre (2) et la roue (4, 4') respective, réduisant ainsi l'encombrement axial du dispositif (1).

Dans un mode de réalisation non représenté, la pièce d'accouplement primaire (6) peut différer de la pièce d'accouplement secondaire (6'). De la même manière, les logements primaire(s) (8) et secondaire(s) (8') et/ou les sites intérieurs primaire(s) (10) et secondaire(s) (10') pourraient être différents. En vue d'harmoniser les pièces du dispositif (1) et/ou leur fabrication, réduisant les coûts de revient et de maintenance, et simplifiant le dispositif (1), les pièces d'accouplement primaire(s) (6) et secondaire(s) (6') sont préférentiellement identiques. Préférentiellement, les logements primaire(s) (8) et secondaire(s) (8') sont également identiques. Et de même, les site intérieur(s) primaire(s) (10) et secondaire(s) (10') sont idéalement identiques. En outre, dans le deuxième mode de réalisation préféré, l'ensemble des dispositions et caractéristiques en relation avec les première et deuxième roues (4, 5) s'appliquent préférentiellement, par transposition, respectivement aux troisième et quatrième roues (4', 5'). Il en est de même des pièces d'accouplement (6, 6'), des logements (8, 8') et des sites intérieurs (10, 10') qui leur sont respectivement associés. On notera toutefois que les première et deuxième positions du baladeur (7) sont inversées pour la première et la troisième roue (4, 4').

Selon une caractéristique de l'invention, un moyen élastique (16) est associé à chaque pièce d'accouplement (6, 6') et génère un effort tendant à éloigner du premier axe (2') au moins une partie de la pièce d'accouplement (6, 6') considérée. Ce moyen élastique (16) garantit une sollicitation centrifuge permanente sur la pièce d'accouplement (6, 6') considérée, assurant qu'elle s'engage dans un site intérieur (10, 10') lorsque le baladeur (7) n'induit aucun effort sur la pièce d'accouplement (6, 6') considérée et que celle-ci est alignée avec un site intérieur (10, 10'). De préférence, le ou chaque moyen élastique (16) est réalisé par au moins un ressort de compression monté entre le premier arbre (2) et la première roue (4) ou entre le premier arbre (2) et la troisième roue (4'). Le ou chaque moyen élastique (16) est avantageusement monté dans un logement (8, 8') respectif du premier arbre (2), susceptible de recevoir également une pièce d'accouplement (6, 6') respective.

Alternativement voire additionnellement, lors de la rotation du premier arbre (2), au moins une partie de chaque pièce d'accouplement (6, 6') pourrait être éloigner du premier axe (2') par force centrifuge et/ou magnétique lorsque le baladeur (7) n'induit aucun effort sur la pièce d'accouplement (6, 6') considérée et que celle-ci est alignée avec un site intérieur (10, 10').

Le premier arbre (2) comprend au moins un logement primaire (8) dans lequel la pièce d'accouplement primaire (6) est montée mobile. Le premier arbre (2) comprend aussi au moins un logement secondaire (8') dans lequel la pièce d'accouplement secondaire (6') est montée mobile. Chaque logement (8, 8') est adapté à la forme de la pièce d'accouplement (6, 6') respective. Préférentiellement, tous les logements (8, 8') sont identiques. Chaque logement (8, 8') est légèrement plus grand que la pièce d'accouplement (6, 6') correspondante, autorisant le déplacement de cette dernière dans le logement (8, 8') respectif, préférentiellement avec guidage par les parois du logement concerné et en accord avec le déplacement autorisé. De manière simple, le premier arbre (2) comporte autant de logements (8) que de pièces d'accouplement (6, 6'), évitant de fragiliser la résistance mécanique du premier arbre (2). Chaque pièce d'accouplement (6, 6') est préférentiellement une clavette, de préférence une clavette parallèle s'étendant parallèlement au premier axe (2'). Chaque logement (8, 8') est ainsi une rainure de clavette ménagée dans le premier arbre (2) et parallèle au premier axe (2'). Les pièces d'accouplement primaires (6) et les pièces d'accouplement secondaires (6') pourraient présenter des formes différentes. Par souci d'uniformisation, toutes les pièces d'accouplement (6, 6') sont identiques.

La première roue (4) comprend au moins un site intérieur primaire (10). Similairement, la troisième roue (4') comprend au moins un site intérieur secondaire (10'). Chaque site intérieur (10, 10') permet la transmission de mouvement entre la pièce d'accouplement (6, 6') et la roue (4, 4') concernées, respectivement entre le premier arbre (2) et la première roue (4) et/ou la troisième roue (4'). De manière simple, pour permettre une transmission de mouvement entre le premier arbre (2) et la première roue (4) et/ou la troisième roue (4') dans les deux sens de rotation , chaque pièce d'accouplement (6, 6') peut être montée coulissante et/ou rétractable selon une direction sensiblement perpendiculaire au premier axe (2') dans le logement (8, 8') respectif, vu selon le premier axe (2'). Tel qu'illustré sur la figure 6C, chaque site intérieur (10, 10') peut être un rainure interne droite, permettant à chaque pièce d'accouplement (6, 6') de transmettre la rotation dans les deux sens de rotation. De manière simple, afin d'être rétractable, le ou chaque ressort de compression du moyen élastique (16) est alors préférentiellement situé, vu suivant le premier axe (2'), au centre du logement (8, 8') respectif.

Afin d'autoriser chaque pièce d'accouplement (6, 6') à transmettre la rotation entre le premier arbre (2) et la roue (4, 5) respective dans un seul sens de rotation, chaque pièce d'accouplement (6, 6') est préférentiellement montée pivotante dans un logement (8, 8') respectif du premier arbre (2) autour d'un axe déporté (11) respectif sensiblement parallèle au premier axe (2'). Chaque axe déporté (11) est situé, vu suivant une coupe perpendiculaire au premier axe (2'), proche d'une extrémité latérale du logement (8, 8') respectif et préférentiellement du fond dudit logement (8, 8'). Afin de réduire l'effort nécessaire pour faire pivoter chaque pièce d'accouplement (6, 6'), le ou chaque ressort de compression du moyen élastique (16) est situé, vu suivant une coupe perpendiculaire au premier axe (2'), à l'extrémité latérale du logement (8, 8') opposée à celle de l'axe déporté (11) respectif.

Tel que représenté sur la figure 6A, afin de maintenir chaque pièce d'accouplement (6, 6'), dans sa position sortie, partiellement dans le logement (8, 8') respectif, chaque site intérieur (10, 10') est préférentiellement une rainure interne arrondie, vu suivant le premier axe (2'). Préférentiellement, le fond de chaque site intérieur (10, 10'), en vue suivant le premier axe (2'), situé, lorsqu'il est aligné avec un logement (8, 8') (voir figure 6A), du côté d'un axe déporté (11) est plus proche du premier axe (2') que le fond de la rainure à l'autre extrémité du site intérieur (10, 10') considéré.

Plus précisément, chaque site intérieur (10, 10') peut présenter, vu suivant le premier axe (2'), la forme d'une dent d'une roue à rochet. Ainsi, lorsque le premier arbre (2) tourne dans un sens de rotation (sens horaire sur la figure 6A), les pièces d'accouplement (6, 6') peuvent venir en prise avec les sites intérieurs (10, 10'), transmettant ainsi l'entrainement en rotation entre le premier arbre (2) et la roue (4, 4') concernée. Lorsque le premier arbre (2) tourne dans l'autre sens de rotation (sens antihoraire sur la figure 6A), la roue (4, 4') concernée est en roue libre par rapport au premier arbre (2), n'impliquant aucune transmission de rotation entre le premier arbre (2) et la roue (4, 4') concernée (dans cet autre sens de rotation). Alternativement, chaque pièce d'accouplement (6, 6') pourrait être montée coulissante et pivotante dans le logement (8, 8') respectif.

Dans le but d'augmenter le couple maximal transmissible par le dispositif (1) entre le premier arbre (2) et les première et troisième roues (4, 4'), la première roue (4) et la troisième roue (4') présente chacune plusieurs sites intérieurs (10, 10'). De plus, plusieurs pièces d'accouplement (6, 6') sont également associées à chacune des première et troisième roues (4, 4'). Ainsi qu'il ressort des figures 6, la première roue (4) et la troisième roue (4') présente chacune préférentiellement plus de sites intérieurs (10, 10') que ne lui sont associées de pièces d'accouplement (6, 6'), permettant de réduire l'angle de rotation du premier arbre (2) autour de son premier axe (2') avant que la ou chaque pièce d'accouplement (6, 6') ne s'engage dans un site intérieur (10, 10') et ne transmette le mouvement de rotation entre le premier arbre (2) et les première et troisième roues (4, 4').

Préférentiellement, chaque pièce d'accouplement (6, 6') est montée pivotante par rapport au premier arbre (2) autour de l'axe déporté (11) respectif dans le même sens de rotation. Plus précisément, la ou chaque pièce d'accouplement primaire (6) et la ou chaque pièce d'accouplement secondaire (6') sont montées pivotante par rapport au premier arbre (2) autour de l'axe déporté (11) respectif dans le même sens de rotation. Aussi, le fonctionnement en roue libre des première roue (4) et troisième roue (4') permettent l'entrainement du deuxième arbre (3) par le premier arbre (2) dans un seul sens de rotation, et la rotation libre du deuxième arbre (3) par rapport au premier arbre (2) dans l'autre sens de rotation. Ainsi, l'inertie en rotation du deuxième arbre (3) n'influe pas la vitesse en rotation du premier arbre (2), constituant ainsi un moyen de sécurité pouvant éviter une détérioration du dispositif (1).

Préférentiellement, le baladeur (7) présente une forme de bague encerclant le premier arbre (2), permettant de guider simplement son déplacement axial suivant le premier axe (2'). Le baladeur (7) est monté entre la première roue (4) et la troisième roue (4'). Comme cela ressort de ce qui précède, un chevauchement, même partiel, du baladeur (7) et d'une pièce d'accouplement (6, 6') permet de dégager cette pièce d'accouplement (6, 6') du site intérieur (10, 10') concerné. Dans le mode de réalisation préféré, dans la première position du baladeur (7), la pièce d'accouplement primaire (6) est située partiellement entre le premier arbre (2) et le baladeur (7), et, dans la deuxième position du baladeur (7), la pièce d'accouplement secondaire (6') est située partiellement entre le premier arbre (2) et le baladeur (7), permettant de limiter ou réduire l'amplitude de déplacement axial du baladeur (7) entre ses première et deuxième positions. Par conséquent, la dimension du dispositif (1) suivant la direction du premier axe (2') peut être réduite.

Afin de réduire la dimension du dispositif (1) suivant la direction du premier axe (2'), le déplacement axial du baladeur (7) entre sa première et sa deuxième position est inférieur à la dimension axiale de la première roue (4) au niveau de son diamètre intérieur. Plus préférentiellement encore, le déplacement axial du baladeur (7) entre sa première et sa deuxième position est inférieur à la dimension axiale de chacune des première roue (4) et troisième roue (4') au niveau de leur diamètre intérieur. On note que plus la dimension axiale d'une roue (4, 4') au niveau de son diamètre intérieur est importante, plus le couple maximal transmissible est important, le dispositif (1) permettant ainsi de transmettre un couple important avec des dimensions réduites.

Le dispositif peut comprendre au moins une butée axiale permettant de stopper le déplacement axial du baladeur (7) dans une direction. De manière à limiter le nombre de composants du dispositif (1), une butée axiale est réalisée par la première roue (4). Pour la même raison, une autre butée axiale est réalisée par la troisième roue (4').

Afin d'augmenter le couple maximal transmissible respectif avec le premier arbre (2), au moins deux pièces d'accouplement (6, 6') sont associées à chacune des première et troisième roues (4, 4'). Ainsi que représentées sur les figures 6, dans le mode de réalisation préféré, à chacune des première et troisième roue (4, 4') sont associées trois pièces d'accouplement (6, 6') respectives. Préférentiellement, les pièces d'accouplement primaires (6) sont réparties régulièrement autour du premier axe (2'). Similairement, les pièces d'accouplement secondaires (6') sont réparties régulièrement autour du premier axe (2'). Afin de permettre la correspondance avec des pièces d'accouplement (6, 6') également réparties autour du premier axe (2'), les sites intérieurs (10, 10') sont aussi répartis régulièrement autour du premier axe (2'), ainsi que représenté sur la figure 6A.

Dans sa première position, le baladeur (7) applique un effort sur chaque pièce d'accouplement primaire (6) dirigé sensiblement vers le premier axe (2'). De la sorte, chaque pièce d'accouplement primaire (6) ne peut pas être engagée dans un site intérieur primaire (10), ni transmettre de rotation entre le premier arbre (2) et la première roue (4). En outre, dans la première position du baladeur (7), les pièces d'accouplement primaire (6) n'entrent pas en contact la première roue (4), ni avec aucune pièce tournant à une vitesse de rotation différente (que leur vitesse de rotation), évitant leur usure prématurée ainsi qu'un cliquetis constant. Dans le mode de réalisation préféré, dans sa deuxième position, le baladeur (7) applique un effort sur chaque pièce d'accouplement secondaire (6') dirigé sensiblement vers le premier axe (2'). De la sorte, chaque pièce d'accouplement secondaire (6') ne peut pas être engagée dans un site intérieur secondaire (10') de la troisième roue (4'), ni transmettre de rotation entre le premier arbre (2) et la troisième roue (4'). En outre, dans la deuxième position du baladeur (7), les pièces d'accouplement secondaires (6') n'entrent en contact avec aucune pièce tournant à une vitesse de rotation différente, évitant leur usure prématurée ainsi qu'un cliquetis constant

Ainsi qu'il ressort de la figure 2 notamment, le dispositif comprend un carter (17). Le carter (17) peut contenir les roues (4, 4', 5, 5'). Il contient également les pièces d'accouplement (6, 6') et le baladeur (7). Enfin, le carter (17) contient au moins partiellement les arbres primaire (2) et secondaire (3). Préférentiellement, les arbres primaire (2) et secondaire (3) sont guidés en rotation avec le carter (17).

On peut relever que la liaison cinématique entre la première roue (4) et la deuxième roue (5) n'est pas affectée ou dépendante de la position du baladeur (7). Cette liaison cinématique peut être par exemple un engrenage denté (comme représente sur les figures), une courroie, une courroie crantée, une chaîne ou un moyen analogue de transmission de mouvement entre deux arbres. Similairement, la liaison cinématique entre la troisième roue (4') et la quatrième roue (5') n'est pas affectée ou dépendante de la position du baladeur (7).

Il ressort de ce qui précède que les pièces d'accouplement (6, 6') sont solidaires en rotation du premier arbre (2). Afin d'éviter une surface importante de frottement, le baladeur (7) est aussi solidaire en rotation du premier arbre (2). Préférentiellement, une goupille radiale (13) permet de transmettre le mouvement de rotation entre le premier arbre (2) et le baladeur (7). Afin d'autoriser le déplacement axial du baladeur (7), celui-ci peut présenter au moins une rainure (14) orientée parallèlement au premier axe (2') et dans laquelle la goupille radiale (13) est montée coulissante.

Lorsqu'une pièce d'accouplement (6, 6') est située, même partiellement, entre le baladeur (7) et le premier arbre (2), la pièce d'accouplement (6, 6') concernée est en appui avec le baladeur (7) au niveau d'une surface d'appui (9). La surface d'appui (9) pourrait être la surface intérieure cylindrique du baladeur (7). Afin de réduire les frottements lors du déplacement axial du baladeur (7), dans le mode de réalisation préféré, le baladeur (7) comporte une surface d'appui (9) respective pour chaque pièce d'accouplement (6, 6'). Ainsi qu'il ressort de la figure 6B, chaque surface d'appui (9) du baladeur (7) est légèrement proéminente vers l'intérieur ou en direction du premier axe (2'). Ainsi qu'illustré sur la figure 6B, chaque pièce d'accouplement (6, 6') peut entrer entièrement dans le logement (8, 8') respectif et être dégagée totalement du site intérieur (10, 10') concerné, évitant ainsi des frottements lors du déplacement axial du baladeur (7) et réduisant leur encombrement. Cette surépaisseur de chaque surface d'appui (9) est interne et s'étend selon la direction du premier axe (2'). Chaque surépaisseur permet d'exercer sur chaque pièce d'accouplement (6, 6') un effort dirigé sensiblement vers le premier axe (2').

Afin de faciliter le déplacement axial du baladeur (7), le ou chaque bord intérieur d'extrémité du baladeur (7) et/ou le bord extérieur d'extrémité de la ou chaque pièce d'accouplement (6, 6') peut/peuvent présenter un biseau. En effet, ces bords constituent les zones entrant en contact en premier lorsque le baladeur (7) se déplace entre sa deuxième position et sa première position.

Alternativement, un autre (deuxième) baladeur pourrait permettre de dégager la ou chaque pièce d'accouplement secondaire (6') du site intérieur secondaire (10') concerné. En vue de réduire le nombre de composants du dispositif (1) et de simplifier le changement de voie de transmission, le même baladeur (7) permet de dégager la ou chaque pièce d'accouplement primaire (6) et la ou chaque pièce d'accouplement secondaire (6') du site intérieur (10, 10') concerné.

Conformément aux premier et deuxième modes de réalisation, la première roue (4) et la deuxième roue (5) sont des pignons engrenant, préférentiellement droit. Dans ces modes de réalisation, la troisième roue (4') et la quatrième roue (5') sont également des pignons engrenant, et préférentiellement droits. Par ailleurs, le baladeur (7) est arrangé sur le premier arbre (2) entre la première roue (4) et la troisième roue (4'). Ainsi, le dispositif (1) forme une boîte de transmission à deux vitesses. Avantageusement les arbres primaire (2) et secondaire (3) sont parallèles entre eux.

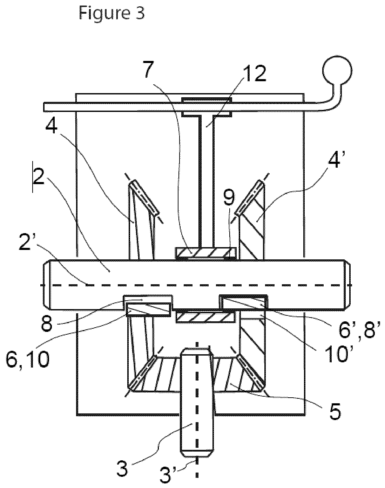

Conformément à un troisième mode de réalisation illustré sur la figure 3, le premier axe (2') est sécant avec un deuxième axe (3') autour duquel le deuxième arbre (3) peut être entrainé en rotation. Dans ce troisième mode de réalisation, le dispositif (1) comprend également une troisième roue (4') montée sur le premier arbre (2). De manière simple, la troisième roue (4') est solidaire du premier arbre (2), préférentiellement dans un seul sens de rotation. Dans une variante, la troisième roue (4') peut être solidaire du premier arbre (2) dans les deux sens de rotation (sans roue libre). Dans le troisième mode de réalisation, au moins une pièce d'accouplement secondaire (6') est montée dans un logement secondaire (8') du premier arbre (2), permettant de solidariser en rotation la troisième roue (4') et le premier arbre (2) (au moins dans un sens de rotation). Telles que représentées sur la figure 3, les première, deuxième et troisième roues (4, 5, 4') sont des pignons coniques. De plus, dans ce troisième mode, la deuxième roue (5) engrène avec la première roue (4) et avec la troisième roue (4'). Le dispositif (1) forme ainsi un inverseur. Sur cet inverseur, le sens de rotation du deuxième arbre (3) dépend de la position du baladeur (7).

Autrement dit, lorsque les diamètres primitifs des première roue (4) et troisième roue (4') sont identiques, tel que représenté sur la figure 3, en première position du baladeur (7), le deuxième arbre (3) tourne dans un premier sens de rotation alors qu'en deuxième position du baladeur (7), le deuxième arbre (3) tourne dans un deuxième sens de rotation contraire au premier sens de rotation (sans avoir modifier le sens de rotation du premier arbre (2)). Ainsi, dans le troisième mode de réalisation, le changement de position du baladeur (7) permet de modifier le sens de rotation du deuxième arbre (3). Dans le troisième mode de réalisation représenté sur la figure 3, le changement de position du baladeur (7) ne modifie pas le rapport de réduction entre le premier arbre (2) et le deuxième arbre (3).

Lorsque le premier axe (2') est perpendiculaire au deuxième axe (3') (en plus d'être sécants), la première roue (4) et la troisième roue (4') ont des diamètres primitifs identiques. Toutefois, en vue de fournir des rapports de transmission différents selon la position du baladeur (7), dans une quatrième mode de réalisation non représenté, le dispositif (1) peut comporter une deuxième roue (5) et une quatrième roue (5') montées sur le deuxième arbre (3), la deuxième roue (5) engrenant avec la première roue (4) et la quatrième roue (5') engrenant avec la troisième roue (4'), toutes les roues (4, 4', 5, 5') étant des pignons coniques. Dans ce quatrième mode de réalisation, les première et troisième roues (4, 4') d'une part, et les deuxième et quatrième roues (5, 5') d'autre part, peuvent présenter des diamètres primitifs différents. Dans ce cas, le premier axe (2') n'est pas perpendiculaire au deuxième axe (3').

Dans ce quatrième mode de réalisation, en première position du baladeur (7), le deuxième arbre (3) tourne dans un premier sens de rotation et le rapport entre le premier arbre (2) et le deuxième arbre (3) est un premier rapport de réduction, et en deuxième position du baladeur (7), le deuxième arbre (3) tourne dans un deuxième sens de rotation contraire au premier sens de rotation et le rapport entre le premier arbre (2) et le deuxième arbre (3) est un deuxième rapport de réduction différent du premier rapport de réduction. Ainsi, dans ce quatrième mode de réalisation, le changement de position du baladeur (7) permet de modifier le sens de rotation du deuxième arbre (3) et le rapport de réduction entre le premier arbre (2) et le deuxième arbre (3).

Aussi, suivant le mode de réalisation, l'invention peut autoriser que le changement de position du baladeur (7) modifie le facteur de réduction entre le premier arbre (2) et le deuxième arbre (3) et/ou le sens de rotation du deuxième arbre (3), rendant un tel dispositif (1) particulièrement polyvalent et adaptable à différents besoins.

La dimension du baladeur (7) selon le premier axe (2'), d'une part, et l'écart selon le premier axe (2') entre la ou chaque pièce d'accouplement primaire (6) et la ou chaque pièce d'accouplement secondaire (6'), d'autre part, sont tels qu'une troisième position du baladeur (7) est possible. La troisième position du baladeur (7) est intermédiaire entre sa première position et sa deuxième position. Dans cette troisième position du baladeur (7), les pièces d'accouplement (6, 6') sont toutes désengagées des sites intérieurs (10, 10') respectifs, de sorte que la première roue (4) et la troisième roue (4') sont toutes deux désaccouplées du premier arbre (2). Dans le mode de réalisation préféré, grâce à cette troisième position du baladeur (7), il est impossible que la première roue (4) et la deuxième roue (5) engrènent en même temps que la troisième roue (4') et la quatrième roue (5') engrènent, évitant une détérioration du dispositif (1). Un autre avantage de la troisième position du baladeur (7) est que toutes les pièces d'accouplement (6, 6') ne sont en contact qu'avec des pièces présentant la même vitesse de rotation qu'elles, à savoir le premier arbre (2) et le baladeur (7) (et le ressort de compression du moyen élastique (16), le cas échéant !). Ainsi, quelle que soit la position du baladeur (7), chaque pièce d'accouplement (6, 6') n'est en contact qu'avec des pièces présentant la même vitesse de rotation qu'elle, évitant une usure prématurée ainsi que des bruits réguliers.

Même sans la troisième position du baladeur (7) mentionnée ci-dessus, ces deux systèmes d'entrainement à roue libre permettent d'éviter la détérioration du dispositif (1) dans le cas où la position du baladeur impliquerait l'engagement de toutes les pièces d'accouplements (6, 6') avec les premier et deuxième éléments de transmission (4, 4').

Afin de permettre l'entrainement du deuxième arbre (3) dans les deux sens de rotation, la première roue (4) peut être montée solidaire en rotation du premier arbre (2) dans les deux sens de rotation lorsque le baladeur (7) est dans sa deuxième position. Similairement, la troisième roue (4') peut être montée solidaire en rotation du premier arbre (2) dans les deux sens de rotation lorsque le baladeur (7) est dans sa deuxième position. Ceci peut être obtenu de préférence grâce à des sites intérieurs (10, 10') réalisés par des rainures extérieures droites, simplifiant ainsi leur usinage. Autrement dit, les arrêtes du fond de chaque site intérieur (10, 10') sont parallèles et équidistantes au premier axe (2'). Afin d'éviter la détérioration du dispositif (1), la deuxième roue (5) et/ou la quatrième roue (5') peut être montée solidaire en rotation du deuxième arbre (3) dans un seul sens de rotation grâce à une roue libre respective.

On peut également noter que le déplacement axial du baladeur (7) suivant le premier axe (2') n'implique pas de déplacement axial (suivant le premier axe (2')) des pièces d'accouplement (6, 6'), permettant ainsi avantageusement de réduire l'encombrement du dispositif (1) suivant le premier axe (2').

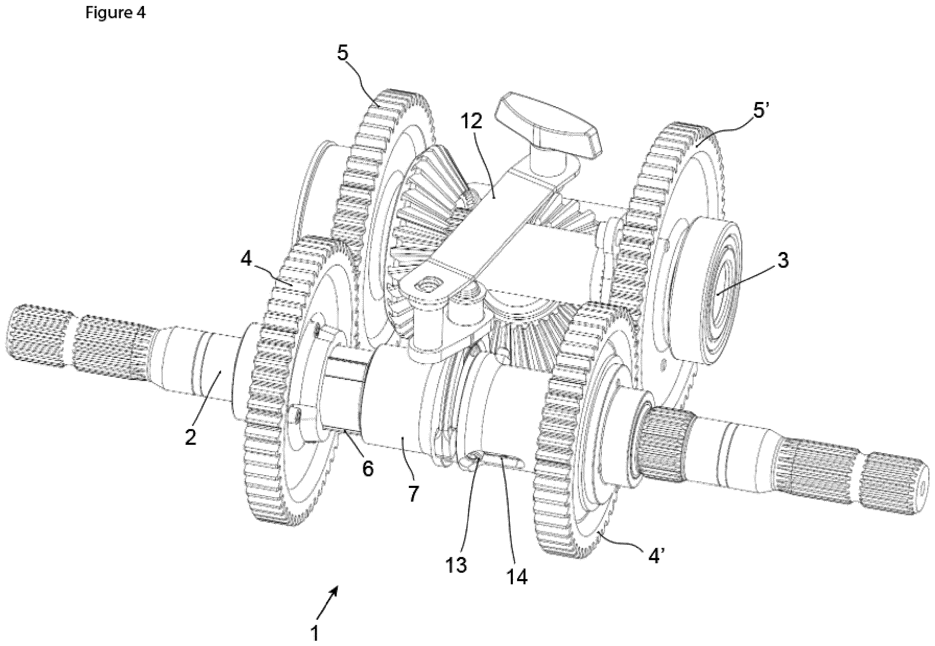

L'invention concerne également une machine agricole, en particulier faucheuse à disques, caractérisée en ce qu'elle comprend un dispositif (1) tel que décrit ci-dessus, le baladeur (7) étant solidaire en translation, suivant le premier axe (2'), d'un organe de manoeuvre (12) ou soumis à l'action d'un actionneur électrique, hydraulique ou pneumatique, lequel détermine la position axiale du baladeur (7) sur le premier arbre (2). Tel que représenté sur la figure 4, l'organe de manoeuvre (12) est actionné manuellement. De préférence, le premier arbre (2) est l'arbre d'entrée, relié à un élément moteur, et le deuxième arbre (3) est l'arbre de sortie, relié aux disques de fauche.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de transmission de mouvement de rotation, lequel comprend un premier arbre (2) pouvant être entrainé en rotation autour d'un premier axe (2') et un deuxième arbre (3), une première roue (4) montée sur le premier arbre (2), une deuxième roue (5) solidaire en rotation du deuxième arbre (3) au moins dans un sens de rotation et liée cinématiquement à la première roue (4), et au moins une pièce d'accouplement primaire (6) montée dans un logement primaire (8) du premier arbre (2), le dispositif (1) comprenant également un baladeur (7) monté axialement mobile sur le premier arbre (2) de sorte à pouvoir occuper une première position dans laquelle la pièce d'accouplement primaire (6) ne peut pas transmettre sa rotation à la première roue (4), et une deuxième position dans laquelle la pièce d'accouplement primaire (6) est engagée dans un site intérieur (10) de la première roue (4) de sorte que la pièce d'accouplement primaire (6) peut transmettre la rotation entre le premier arbre (2) et la première roue (4) au moins dans un sens de rotation,
dispositif (1) **caractérisé en ce que**, dans sa première position, le baladeur (7) induit un effort sur la pièce d'accouplement primaire (6) dirigé sensiblement vers le premier axe (2') de sorte que la pièce d'accouplement primaire (6) ne peut pas être engagée dans un site intérieur primaire (10), ni transmettre de rotation entre le premier arbre (2) et la première roue (4).

2. Dispositif (1) selon la revendication 1, **caractérisé en ce qu'**il comprend également une troisième roue (4') montée sur le premier arbre (2), une quatrième roue (5') solidaire en rotation du deuxième arbre (3) au moins dans un sens de rotation et liée cinématiquement à la troisième roue (4') et au moins une pièce d'accouplement secondaire (6') montée dans un logement secondaire (8') du premier arbre (2), et **en ce que**, dans la première position du baladeur (7), la pièce d'accouplement secondaire (6') est engagée dans un site intérieur (10') secondaire de la troisième roue (4') de sorte que la pièce d'accouplement secondaire (6') peut transmettre la rotation entre le premier arbre (2) et la troisième roue (4') au moins dans un sens de rotation, et **en ce que**, dans sa deuxième position, le baladeur (7) induit un effort sur la pièce d'accouplement secondaire (6') de sorte que la pièce d'accouplement secondaire (6') ne peut pas être engagée dans un site intérieur secondaire (10') de la troisième roue (4') ni transmettre de rotation entre le premier arbre (2) et la troisième roue (4').

3. Dispositif (1) selon la revendication 1, **caractérisé en ce qu'**il comprend également une troisième roue (4') montée sur le premier arbre (2) et solidaire du premier arbre (2) au moins dans un sens de rotation et au moins une pièce d'accouplement secondaire (6') montée dans un logement secondaire (8') du premier arbre (2), **en ce que** le premier axe (2') est sécant avec un deuxième axe (3') autour duquel le deuxième arbre (3) peut être entrainé en rotation, **en ce que** les première, deuxième et troisième roues (4, 5, 4') sont des pignons coniques, **en ce que** la deuxième roue (5) engrène avec la première roue (4) et avec la troisième roue (4').

4. Dispositif (1) selon l'une quelconque des revendications 1 2 ou 3, **caractérisé en ce qu'**un moyen élastique (16) est associé à chaque pièce d'accouplement (6, 6') et génère un effort tendant à éloigner du premier axe (2') au moins une partie de la pièce d'accouplement (6, 6') considérée.

5. Dispositif (1) selon l'une quelconque des revendications 1 à 4, **caractérisé en ce que** chaque pièce d'accouplement (6, 6') est montée pivotante dans un logement (8, 8') respectif du premier arbre (2) autour d'un axe déporté (11) respectif sensiblement parallèle au premier axe (2').

6. Dispositif (1) selon l'une quelconque des revendications 2 à 5, **caractérisé en ce que** chaque pièce d'accouplement (6, 6') est montée pivotante par rapport au premier arbre (2) autour de l'axe déporté (11) respectif dans le même sens de rotation.

7. Dispositif (1) selon l'une quelconque des revendications 1 à 6, **caractérisé en ce que**, dans la première position du baladeur (7), la pièce d'accouplement primaire (6) est située partiellement entre le premier arbre (2) et le baladeur (7), et **en ce que**, dans la deuxième position du baladeur (7), la pièce d'accouplement secondaire (6') est située partiellement entre le premier arbre (2) et le baladeur (7).

8. Dispositif (1) selon l'une quelconque des revendications 1 à 7, **caractérisé en ce que** le baladeur (7) comporte, pour chaque pièce d'accouplement (6, 6'), une surface d'appui (9) respective légèrement proéminente vers l'intérieur ou en direction du premier axe (2').

9. Dispositif (1) selon l'une quelconque des revendications 3 à 8, **caractérisé en ce que** les diamètres primitifs des première roue (4) et troisième roue (4') sont identiques, et **en ce que** le changement de position du baladeur (7) permet de modifier le sens de rotation du deuxième arbre (3).

10. Dispositif (1) selon l'une quelconque des revendications 2 et/ou l'une quelconque des revendications 4 à 8, **caractérisé en ce que** le changement de position du baladeur (7) permet de modifier le facteur de réduction entre le premier arbre (2) et le deuxième arbre (3).

11. Dispositif (1) selon l'une quelconque des revendications 1 à 11, **caractérisé en ce que** la dimension du baladeur (7) selon le premier axe (2'), d'une part, et l'écart selon le premier axe (2') entre la ou chaque pièce d'accouplement primaire (6) et la ou chaque pièce d'accouplement secondaire (6'), d'autre part, sont tels qu'une troisième position du baladeur (7) est possible, dans laquelle les pièces d'accouplement (6, 6') sont toutes désengagées des sites intérieurs (10, 10') respectifs, de sorte que la première roue (4) et la troisième roue (4') sont toutes deux désaccouplées du premier arbre (2).

12. Dispositif (1) selon l'une quelconque des revendications 1 à 12, **caractérisé en ce que** le baladeur (7) comporte une surface d'appui (9) respective pour chaque pièce d'accouplement (6, 6'), chaque surface d'appui (9) étant légèrement proéminente vers l'intérieur ou en direction du premier axe (2').

13. Machine agricole, en particulier faucheuse à disques, **caractérisée en ce qu'**elle comprend un dispositif (1) selon l'une quelconque des revendications 1 à 13, le baladeur (7) étant solidaire en translation, suivant le premier axe (2'), d'un organe de manoeuvre (12) ou soumis à l'action d'un actionneur électrique, hydraulique ou pneumatique, lequel détermine sa position axiale sur le premier arbre (2).
